Europäisches Patentamt

European Patent Office

Office européen des brevets

(11) Veröffentlichungsnummer: **0 219 173**
**A2**

(12) # EUROPÄISCHE PATENTANMELDUNG

(21) Anmeldenummer: 86201769.6

(22) Anmeldetag: 13.10.86

(51) Int. Cl.⁴: **G 11 B 23/04**
**G 11 B 15/28, G 11 B 15/60**
**//G01B7/31**

(30) Priorität: 16.10.85 DE 3536777

(43) Veröffentlichungstag der Anmeldung:
22.04.87 Patentblatt 87/17

(84) Benannte Vertragsstaaten:
DE FR GB IT

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB IT

(72) Erfinder: Werner, Sabine
Winzerstrasse 5
D-8000 München 40(DE)

(74) Vertreter: Kupfermann, Fritz-Joachim et al,
Philips Patentverwaltung GmbH Billstrasse 80 Postfach
10 51 49
D-2000 Hamburg 28(DE)

(54) Messkassette mit elektrischer Messwertübertragung.

(57) Die Erfindung bezieht sich auf eine Meßkassette (1) mit
elektrischer Meßwertübertragung zum Messen der Position
eines Bauteiles (6) in einem Magnetband-Kassettengerät, die
mit wenigstens einem Meßtaster (5) das Bauteil (6) abtastet,
der über ein elektrisches Meßglied einen Meßwert abgibt, der
ein Indiz über eine Position des Bauteiles (6) im Gerät liefert.
Es ist ein Referenztaster (3) derart mit dem Meßtaster (5)
zusammen im Kassettengerät (1) angeordnet, daß sie, wenn
die Kassette (1) auf das Gerät aufgesetzt ist, gemeinsam die
Position einer Tonwelle (6) des Gerätes abtasten und über den
Meßwert die Azimutposition auf elektrischem Wege ermitteln.

FIG.1

BESCHREIBUNG

Meßkassette mit elektrischer Meßwertübertragung

Die Erfindung bezieht sich auf eine Meßkassette mit elektrischer Meßwertübertragung zum Messen der Position eines Bauteiles in einem Magnetbandkassettengerät, die mit wenigstens einem Taster das Bauteil abtastet, der über ein elektrisches Meßglied einen Meßwert abgibt, der ein Indiz über eine Position des Bauteiles im Gerät liefert.

Es ist bereits eine Meßkassette bekannt, die Funktionsdaten von Magnetband-Kassettengeräten meßbar und über elektrische Leitungen an Anzeigegeräte übertragbar macht. Die Meßkassette ist mit wenigstens einem Taster versehen, der einen Magnetkopf abtastet, wobei über einen Dehnungsmeßstreifen ein Meßwert erzeugt wird, der ein Indiz für die Stellung des Magnetkopfes im Gerät abgibt. Der Taster ist dazu an einer Blattfeder angeordnet, die einen oder mehrere Dehnungsmeßstreifen trägt.

Es ist Aufgabe der Erfindung, eine Meßkassette der eingangs erwähnten Art zu schaffen, mit der es möglich ist, die Azimutstellung einer Tonwelle innerhalb des Gerätes zu ermitteln und in Form von elekrischen Meßwerten an ein Meßgerät zu übertragen.

Die gestellte Aufgabe ist erfindungsgemäß dadurch gelöst, daß ein Referenztaster derart mit dem Meßtaster zusammen im Kassettengehäuse angeordnet ist, daß sie, wenn die Kassettte auf das Gerät aufgesetzt ist, gemeinsam die Position einer Tonwelle des Gerätes abtasten und über den Meßwert die Azimutposition auf elektrischem Wege ermitteln.

Mit Hilfe der Meßkassette läßt sich leicht der Tonwellenwinkel zum Gerätechassis ermitteln. Aufgrund dieser Winkelermittlung läßt sich die Azimutlage der Tonwelle korrigieren.

Nach einer weiteren Ausgestaltung der Erfindung ist vorgesehen, daß die beiden Taster mit ihren Kontaktflächen in einem fest vorgegebenen Referenzabstand axial versetzt an der Tonwelle anliegen. Da die beiden Taster in einem fest vorgegebenen axialen Abstand an die Tonwelle anlegbar sind, läßt sich über diesen Abstand und den von dem Meßtaster gemessenen Meßwert der Tonwellenwinkel und damit die Azimutposition ermitteln und gegebenenfalls korrigieren.

Nach einer weiteren Ausgestaltung der Erfindung ist vorgesehen, daß der Referenztaster Teil eines Trägers ist, auf dem der Meßtaster angeordnet ist. Die Taster können damit auf besonders einfache Weise miteinander zusammenwirken. Während der Referenztaster einen O-Referenzwert abgibt, liefert der Meßtaster den Meßwert. Der fest vorgegebene Referenzabstand mit dem Meßtaster-Meßwert garantieren eine einwandfreie Ermittlung etwaiger Verstellungen der Tonwelle. Wichtig ist dabei, daß der Referenztaster im Kassettengehäuse möglichst spielfrei gelagert ist.

Nach einer weiteren Ausgestaltung der Erfindung ist vorgesehen, daß zwei Meßtaster drehbar auf dem Träger angeordnet sind, wobei die Andruckrichtung der beiden Meßtaster um 90° versetzt ist gegenüber der Tonwellenachse und die Meßtaster unter Vorspannung an die Tonwelle andrückbar sind. Auf diese Weise erhält man Meßwerte in dreidimensionaler Richtung und optimale Meßwerte für die Tonwellenstellung.

In besonderer Ausgestaltung der Erfindung ist vorgesehen, daß die Meßtaster mit Blattfedern verbunden sind, auf denen Dehnungsmeßstreifen vorgesehen sind, und daß die Blattfedern beim Abtasten der Tonwelle gegen Anschläge auf dem Träger drücken. Die Taster drücken auf diese Weise sanft gegen die Tonwelle, die dadurch vor Beschädigungen bewahrt wird. Zusätzlich wird das Auflegen der Kassette erleichtert.

Die Erfindung wird anhand des in den Zeichnungen dargestellten Ausführungsbeispieles näher erläutert. Es zeigen:

Fig. 1 eine Draufsicht auf eine teilweise geöffnete Meßkassette, die auf ein Magnetbandgerät aufgelegt ist und die mit Tastern die Tonwelle abtastet,

Fig. 2 eine schaubildliche Darstellung wesentlicher Teile der Meßkassette nach Fig. 1,

Fig. 3 eine übertrieben schräg dargestellte Tonwelle, deren Schräglage mit Hilfe der Meßkassette ermittelt wird,

Fig. 4 eine Draufsicht der auf einer Abgleichsplatte angeordneten Meßkassette.

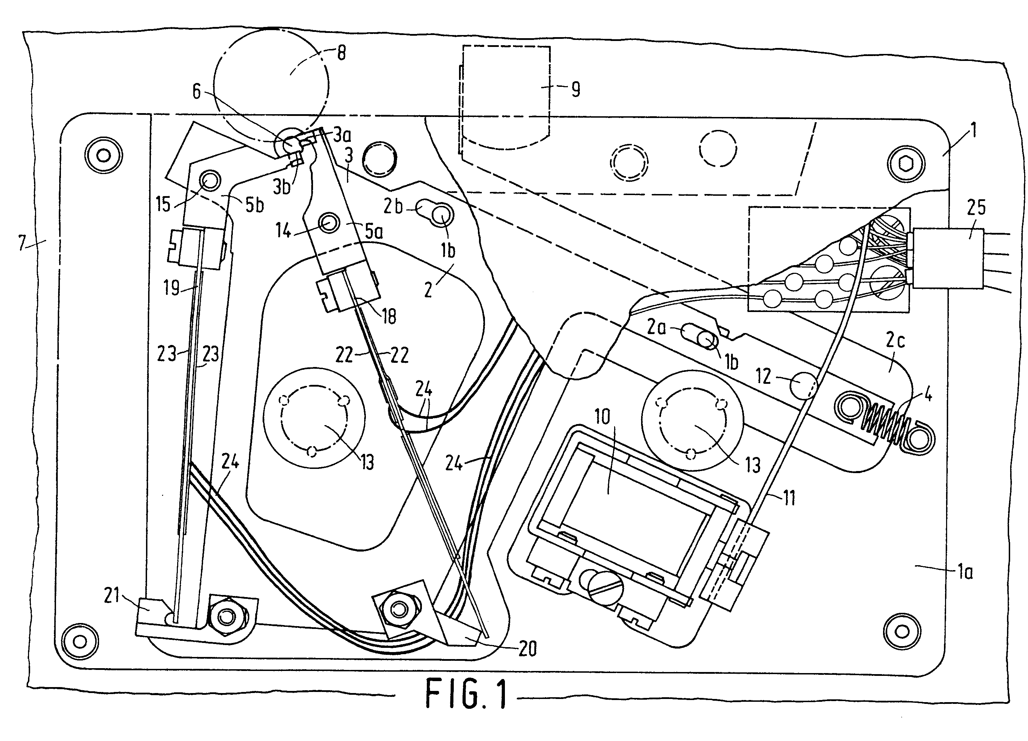

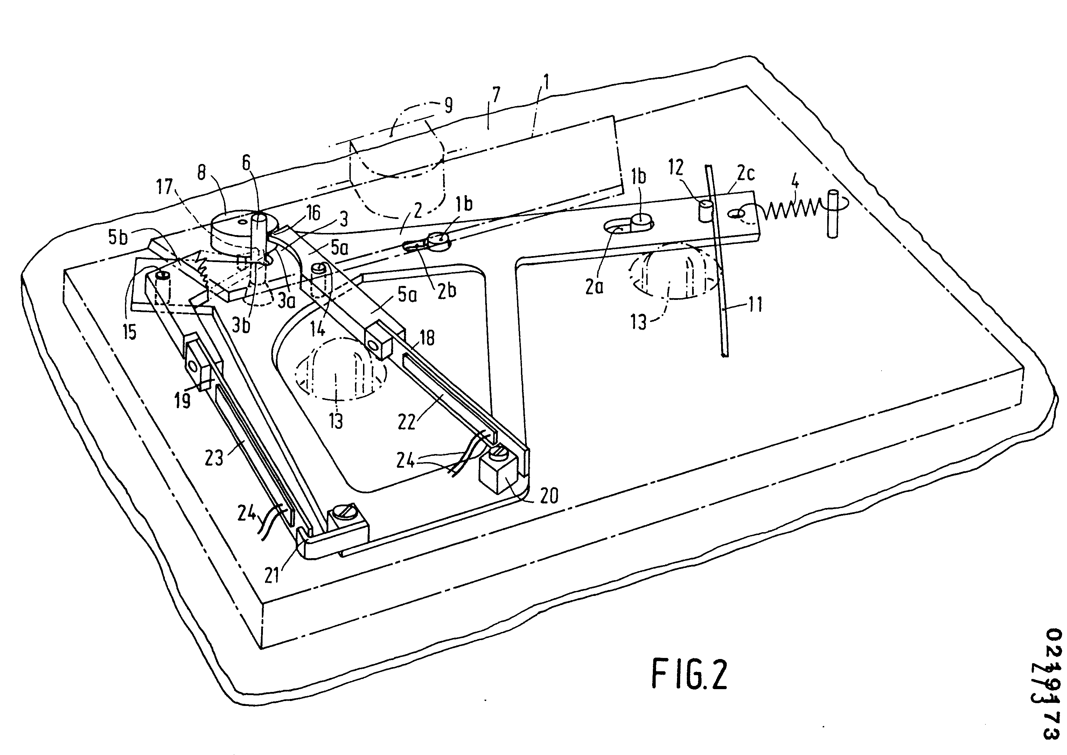

Die in den Fig. 1 und 2 dargestellte Meßkassette 1 ist in ihrem Inneren mit drei Tastern, einem Referenztaster 3 und zwei Meßtastern 5a, 5b, ausgerüstet. Der Referenztaster 3 liegt auf einem Träger 2 und ist gegenüber einer Bodenplatte 1a der Meßkassette verschieblich. Zu diesem Zweck ist der Träger 2 mit zwei Langlöchern 2a, 2b versehen, durch die Führungsstifte 1b hindurchgreifen. An dem rückwärtigen Ende 2c des Trägers 2 greift eine Feder 4 an, die bestrebt ist, den Referenztaster 3 von einer Tonwelle 6 wegzuziehen. Diese Tonwelle ist Teil eines Abspielgerätes, von dem ein Teil 7 einer Chassisplatte dargestellt ist. Auf der Chassisplatte ist auch eine Druckrolle 8 gelagert, die während des Gerätebetriebes gegen die Tonwelle 6 drückbar ist. An dem Gerät ist ein Tonkopf 9 vorgesehen, der nur andeutungsweise dargestellt ist. Auf der Bodenplatte 1a der Meßkassette 1 ist eine Elektromagnetvorrichtung 10 angeordnet. Diese Elektromagnetvorrichtung 10 wirkt auf einen federnden Hebelarm 11, der auf einen Stift 12 des Trägers 2 einwirkt und damit in der Lage ist, den Träger entgegen der Zugkraft der Feder 4 in Richtung auf die Tonwelle 6 zu schieben. Die Anordnung des Trägers 2 ist dabei so getroffen, daß er bei seinen Bewegungen die Wickeldorne 13 des Gerätes nicht berühren kann. Der Referenztaster 3 weist zwei im Winkel zueinander stehende Kontaktflächen 3a, 3b auf, die sich gegen die Tonwelle 6 anlegen können. Vorzugsweise liegen die Kontaktflächen 3a und 3b im rechten Winkel zueinander. Der Träger 2 ist auf den Stiften 1b derart mit Spiel gelagert, daß er leicht verschoben und verdreht werden kann, so daß immer gewährleistet ist, daß die beiden Kontaktflächen 3a und 3b beim Verschieben Kontakt mit der Tonwelle 6 bekommen. Sobald sich die Kontaktflächen 3a und 3b gegen die Tonwelle gelegt haben, ist mit dem Referenztaster 3 die Null-Referenz erreicht.

Auf dem Träger 2 sind zwei Lagerstellen 14 und 15 vorgesehen, auf denen die beiden Meßtaster 5a und 5b drehbar gelagert sind. Die Meßtaster 5a und 5b sind mit Fühlspitzen 16 und 17 versehen. Die Lagerstellen 14 und 15 der Meßtaster 5a und 5b verlaufen etwa achsparallel zur Tonwelle 6. Die Fühlspitzen 16 und 17 sind dabei so an den Meßtastern 5a und 5b angeordnet, daß sie um 90° versetzt zueinander an die Tonwelle 6 anlegbar sind. Die Verschieberichtung des Trägers 2 muß um 45° zu den Andruckrichtungen der Fühlspitzen 16 und 17 versetzt sein.

Die beiden Meßtaster 5a und 5b tragen Blattfedern 18 und 19, die im wesentlichen von der Tonwelle 6 weg verlaufen. Die freien Enden der Blattfedern 18 und 19 sind nach dem Vorschieben des Trägers 2 gegen Anschläge 20 und 21 auf dem Träger 2 aufgelaufen und haben dabei zusammen mit der Feder 4 eine Vorspannung auf die Fühlspitzen 16, 17 gegeben. Die Anschläge 20 und 21 sind vorzugsweise zur Nachjustierung gegenüber dem Träger 2 einstellbar. Auf den Blattfedern 18, 19 sind Dehnungsmeßstreifen 22, 23 angeordnet, die über elektrische Leitungen 24 mit einem Stecker 25 verbunden sind, der an ein nicht dargestelltes Meßgerät anschließbar ist.

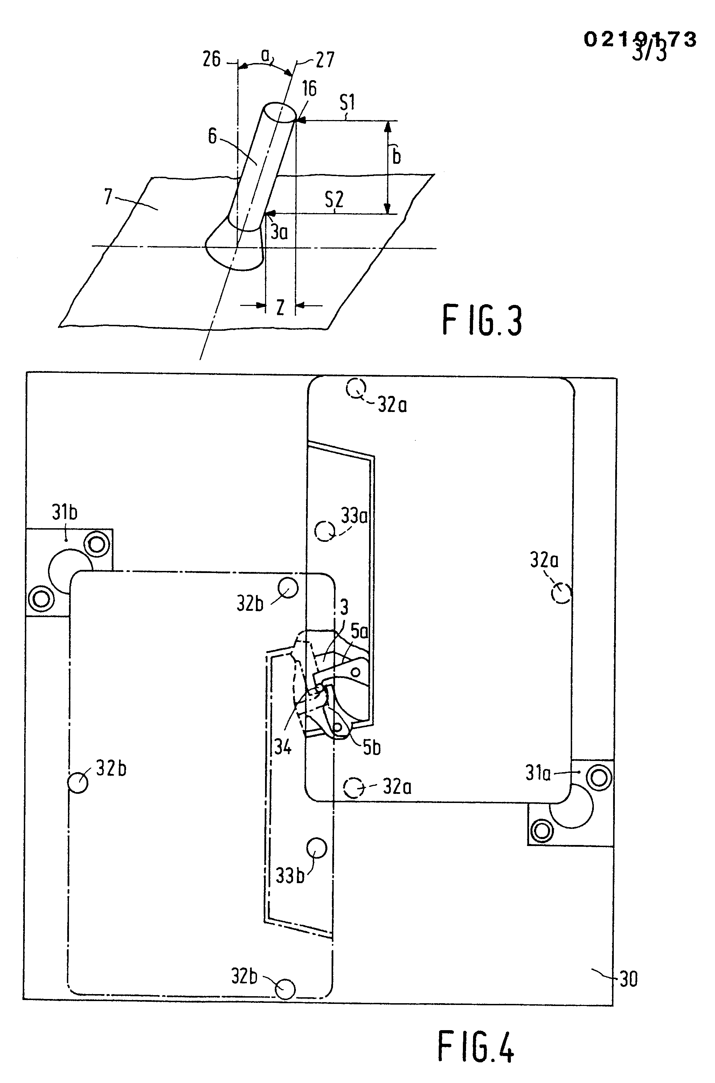

Fig. 3 zeigt die auf der Chassisplatte 7 angeordnete Tonwelle 6 in einer übertriebenen Schrägwinkelstellung, die

mit $\alpha$ bezeichnet ist. Die korrekte Azimutlage der Tonwelle 6 wird durch die strichpunktierte Linie 26 angedeutet. Die verstellte Lage der Tonwelle 6 gibt die strichpunktierte Linie 27 wieder. Der Verstellwinkel $\alpha$ liegt zwischen den Linien 26 und 27. Der Meßpunkt der Fühlspitze 16 des Meßtasters 5a ist durch die Pfeilspitze der Linie S1 angedeutet. Ein Meßpunkt des Referenztasters 3, der sich ergibt, wenn die Kontaktfläche 3a an der Tonwelle 6 anliegt, ist wiedergegeben mittels einer Pfeilspitze der Linie S2. Die Pfeilspitzen der Linien S1 und S2 haben einen Referenzabstand b. Der Abstand b ist fest vorgegeben durch die Anordnung der Taster. Die Pfeile S1 und S2 messen übereinander in einer ersten x-Ebene. Um 90° versetzt gegenüber den Pfeilspitzen S1 und S2 liegen übereinander die Kontaktfläche 3b des Referenztasters 3 und die Fühlspitze 17 des Meßtasters 5b. Diese beiden Meßpunkte liegen in einer y-Ebene des Koordinatensystems. Damit ist es möglich, die Winkelstellung der Tonwelle 6 dreidimensional zu messen.

Für die Fehlerwinkelberechnung ist in Fig. 3 eine Längen-differenz zwischen den Pfeilen S1 und S2 angegeben in der z-Richtung. Die Längendifferenz ist als z bezeichnet. Daraus ergibt sich

$$\tan \alpha = \frac{z}{b} \qquad \text{und} \qquad \alpha = \text{arc tan} \left( \frac{z}{b} \right)$$

Die Dehnungsmeßstreifen 22, 23 liefern als Ausgangsgrößen Widerstandsänderungen, die über eine Meßbrücke in eine Spannungsdifferenz umgebildet werden. Mittels eines

Meßverstärkers kann die Längendifferenz z angezeigt oder die Ausgangsspannung $U_D$ abgelesen werden. Aus der Ausgangsspannung $U_D$ berechnet sich der Azimutfehler der Tonwelle 6 wie folgt:

$$\alpha = \text{arc tan} \frac{U_D \cdot l^2}{U_B \cdot k \cdot h \cdot 45}$$

Dabei bedeuten:

l        die Länge der Blattfedern 18 bzw. 19,

$U_D$    die Ausgangsspannung,

$U_B$    die Betriebsspannung,

k        der Proportionalitätsfaktors der Dehnungsmeßstreifen 22 bzw. 23,

h        die Dicke der Blattfedern 18 bzw. 19,

45      der Einfluß der Übersetzung zwischen den Meßtastern 5a, 5b und den Blattfedern 18, 19 im Verhältnis 5:1 bei dem Referenzabstand b.

Auf diese Weise wird also ein Azimutfehler der Tonwelle ermittelt, soweit er vorhanden ist und vom Meßverstärker auf ein Anzeigegerät als Meßwert übertragen. Entweder elektrisch oder von Hand läßt sich dann die Tonwelle in die richtige Azimutlage drehen.

Fig. 4 zeigt eine Abgleichplatte 30, auf der spiegelbildlich Gegenlagerblöcke 31a und 31b, Stützstifte 32, 32a bzw. 32b sowie Referenzstifte 33a und 33b vorgesehen sind. Zentraler Referenzpunkt dieser Abgleichsplatte ist ein Zylinderstift 34, der die Tonwelle des Gerätes simuliert. Die Winkelstellung dieses Stifte relativ zur Auflageebene der Meßkassette ist zum Abgleichen der Meßkassette unerheblich, da dieser mit Hilfe der Abgleichplatte 30 zweimal angetastet werden kann, wobei die jeweiligen Antastungen um 180° versetzt sind, weil nämlich die Meßkassette 1 in zwei um 180° versetzten Positionen auf der Abgleichsplatte 30 positionierbar ist. Bei der Messung werden die beiden Anzeigen des Meßgerätes während der ersten Antastung des Stiftes 34 auf Null gestellt. Bei der nachfolgenden Messung durch Antastung (um 180° gedreht) wird der doppelte Ausschlag der Winkelverschiebung erhalten. Während der zweiten Antastung des Stiftes 34 werden die beiden Anzeigen auf die Hälfte des Meßwertes eingestellt. Dieser halbierte Meßwert erscheint bei nochmaligem Drehen der Meßkassette um 180° mit umgekehrten Vorzeichen. Somit ist die Meßeinrichtung abgeglichen und ermöglicht nun eine Winkelmessung der Tonwelle im Laufwerk.

PATENTANSPRÜCHE

1. Meßkassette (1) mit elekrischer Meßwertübertragung zum Messen der Position eines Bauteiles (6) in einem Magnetband-Kassettengerät, die wenigstens mit einem Meßtaster (5) das Bauteil (6) abtastet, der über ein elektrisches Meßglied (22, 23) einen Meßwert abgibt, der ein Indiz über eine Position des Bauteiles (6) im Gerät liefert, dadurch gekennzeichnet, daß ein Referenztaster (3) derart mit dem Maßtaster (5) zusammen im Kassettengehäuse (1) angeordnet ist, daß sie, wenn die Kassette (1) auf das Gerät aufgesetzt ist, gemeinsam die Position einer Tonwelle (6) des Gerätes abtasten und über den Meßwert die Azimutposition auf elektrischem Wege ermitteln.

2. Meßkassette nach Anspruch 1, dadurch gekennzeichnet, daß die beiden Taster (3, 5) mit Kontaktflächen (3a, 3b, 16, 17) in einem fest vorgegebenen Referenzabstand (b) axial versetzt an der Tonwelle (6) anliegen.

3. Meßkassette nach Anspruch 2, dadurch gekennzeichnet, daß der Referenztaster (3) Teil eines Trägers (2) ist, auf dem der Meßtaster (5) angeordnet ist.

4. Meßkassette nach Anspruch 3, dadurch gekennzeichnet, daß zwei Meßtaster (5a, 5b) drehbar auf dem Träger (2) angeordnet sind, wobei die Andruckrichtung der beiden Meßtaster (5a, 5b) um 90° versetzt ist gegenüber der Tonwellenachse (27) und die Meßtaster (5a, 5b) unter Vorspannung an die Tonwelle (6) andrückbar sind.

5. Meßkassette nach Anspruch 4, dadurch gekennzeichnet, daß die Meßtaster (5a, 5b) mit Blattfedern (18, 19) verbunden sind, auf denen Dehnungsmeßstreifen (22, 23) vorgesehen sind, und daß die Blattfedern (18, 19) beim Abtasten der Tonwelle (6) gegen Anschläge (20, 21) auf dem Träger (2) drücken.

FIG.1

0219173

FIG.2

0219173

FIG.3

FIG.4